(19) Europäisches Patentamt
European Patent Office
Office européen des brevets

(11) **EP 3 350 059 B1**

(12) **EUROPÄISCHE PATENTSCHRIFT**

(45) Veröffentlichungstag und Bekanntmachung des Hinweises auf die Patenterteilung:
**14.08.2019 Patentblatt 2019/33**

(21) Anmeldenummer: **16765970.5**

(22) Anmeldetag: **13.09.2016**

(51) Int Cl.:
*B62D 15/02* (2006.01)    *B60W 30/18* (2012.01)
*B60W 10/04* (2006.01)    *B60W 10/18* (2012.01)
*B60W 10/20* (2006.01)    *B60W 30/09* (2012.01)
*G05D 1/00* (2006.01)    *G05D 1/02* (2006.01)

(86) Internationale Anmeldenummer:
**PCT/EP2016/071588**

(87) Internationale Veröffentlichungsnummer:
**WO 2017/046101 (23.03.2017 Gazette 2017/12)**

(54) **VERFAHREN UND VORRICHTUNG IN EINEM KRAFTFAHRZEUG ZUM AUTOMATISIERTEN FAHREN**

METHOD AND DEVICE IN A MOTOR VEHICLE FOR AN AUTOMATIC DRIVE

PROCÉDÉ ET DISPOSITIF DANS UN VÉHICULE AUTOMOBILE POUR LA CONDUITE AUTOMATISÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **14.09.2015 DE 102015217498**

(43) Veröffentlichungstag der Anmeldung:
**25.07.2018 Patentblatt 2018/30**

(73) Patentinhaber: **Volkswagen AG**
**38440 Wolfsburg (DE)**

(72) Erfinder:
• **ULBRICH, Simon**
**85049 Ingolstadt (DE)**
• **GROSSJOHANN, Simon**
**38442 Wolfsburg (DE)**
• **HOMEIER, Kai**
**30453 Hannover (DE)**
• **APPELT, Christian**
**38158 Gifhorn (DE)**

(74) Vertreter: **Zucker, Volker**
**Patentanwälte Bressel und Partner mbB**
**Potsdamer Platz 10**
**10785 Berlin (DE)**

(56) Entgegenhaltungen:
**WO-A1-2014/204381**     **DE-A1-102013 003 219**

**Beschreibung**

Die Erfindung betrifft ein Verfahren und eine Vorrichtung in einem Kraftfahrzeug zum automatisierten Fahren.

Moderne Kraftfahrzeuge weisen eine Vielzahl von Assistenzsystemen auf, welche den Fahrer beim Führen des Fahrzeugs unterstützen. Vermehrt kommen dabei semi-autonome und autonome Systeme zum Einsatz, die eine semi- oder vollautomatische Steuerung des Kraftfahrzeugs erlauben.

Bei der Entwicklung von automatisierten Fahrzeugen für den Straßenverkehr auf Autobahnen oder autobahnähnlichen Straßen mit Rechtsfahrgebot (bzw. Linksfahrgebot) kommt es häufig zu Situationen in denen ein automatisiertes Fahrzeug auf der linken (bzw. rechten) Fahrspur fährt. Nachdem ein automatisiertes Fahrzeug geltende Geschwindigkeitsbegrenzungen einhalten muss, kommt es oft zu Szenarien in denen sich ein Fahrzeug von hinten nähert und schneller als das automatisierte Fahrzeug fahren möchte.

Um eine Behinderung dieses nachfolgenden Fahrzeugs zu vermeiden, muss das automatisierte Fahrzeug entscheiden, ob es die Fahrspur räumt oder nicht. Zusätzlich kann der Komfort der Passagiere in dem automatisierten Fahrzeug verbessert werden, wenn nicht andere Fahrzeuge hinter ihnen sehr dicht auffahren, drängeln, oder per Lichthupe oder Hupsignal Ihren Wunsch zum Überholen des automatisierten Fahrzeugs Ausdruck verleihen.

Aus der DE 10 2006 043 149 A1 ist ein Quer- und Längsführungsassistent für ein Kraftfahrzeug zur Unterstützung des Fahrers beim Fahrspurwechsel mit einer Trajektorienberechnungseinheit bekannt, wobei die Trajektorienberechnungseinheit im Falle eines Spurwechselwunsches und bei Erkennen einer ausreichenden Lücke für ein gefahrloses Einscheren auf die Zielspur aus den Daten einer Umfeldsensorik eine Spurwechseltrajektorie ermittelt. Die Trajektorienberechnungseinheit berechnet eine derartige Spurwechseltrajektorie, dass die Behinderung eines vom Spurwechsel betroffenen rückwärtigen Fahrzeugs minimiert wird. Anschließend gibt eine Befehlseinrichtung, in Abhängigkeit von der ermittelten Spurwechseltrajektorie einen Querführungsbefehl an ein Querführungsregelsystem und einen Beschleunigungsbefehl an ein abstandsbezogenes Geschwindigkeitsregelsystem aus.

Aus der DE 10 2013 003 219 A1 ist ein automatisches Anzeigen einer Überholabsicht durch ein Folgefahrzeug bekannt. Es wird ein Verfahren und ein Fahrerassistenzsystem offenbart zur Unterstützung eines Fahrers eines Kraftfahrzeugs, beim Fahren auf einer Überholspur einer zumindest zweispurigen Straße, die in Fahrtrichtung des Kraftfahrzeugs eine Normalspur und zumindest dazu benachbart, die Überholspur aufweist, wobei einem Fahrzeug, das dem Kraftfahrzeug auf der Überholspur voraus fährt, eine Überholabsicht des Kraftfahrzeugs dann automatisch angezeigt wird. Gemäß dem Verfahren wird die Überholabsicht dann automatisch angezeigt, wenn folgende Bedingungen vorliegen: das Kraftfahrzeug folgt dem Fahrzeug auf der Überholspur unter Nutzung eines Abstandsregeltempomaten, das Kraftfahrzeug könnte das vorausfahrende Fahrzeug auf der Überholspur überholen, wenn das Fahrzeug auf die Normalspur wechseln würde, wobei ein Wechsel des Fahrzeugs von der Überholspur auf die Normalspur möglich ist, das Kraftfahrzeug hat eine erkennbare Absicht zum Überhohlen des vorausfahrenden Fahrzeugs, und das vorausfahrende Fahrzeug fährt länger als eine vorgegebene Zeit T0 ohne erkennbare Überholabsicht oder ohne erkennbare Ausweichabsicht auf der Überholspur.

Aus der WO 2014/204381 A1 ist ein gattungsgemäßes Verfahren in einem Kraftfahrzeug zum automatisierten Fahren bekannt, umfassend die folgenden Verfahrensschritte:

- Erfassen von weiteren Kraftfahrzeugen im Umfeld des Kraftfahrzeugs durch mindestens eine Sensorik,
- Erfassen und Erkennen von Fahrspuren durch die mindestens eine Sensorik,
- Zuordnen der erfassten weiteren Kraftfahrzeuge zu den erkannten Fahrspuren durch eine Steuerung,
- Erkennen und Bewerten einer Überholabsicht eines weiteren Kraftfahrzeugs durch eine Überholassistenzeinrichtung und, sofern eine Überholabsicht erkannt wurde:
- Berechnen einer Gesamtnutzung eines möglichen Fahrspurwechsels durch eine Prognoseeinrichtung,
- Anpassen eines Fahrverhaltens des Kraftfahrzeugs durch die Steuerung, wobei der mögliche Fahrspurwechsel durchgeführt wird, wenn der berechnete Gesamtnutzen einen vorgegebenen Gesamtnutzenschwellwert erreicht oder überschreitet, und wobei der mögliche Fahrspurwechsel nicht durchgeführt wird, wenn der berechnete Gesamtnutzen den vorgegebenen Gesamtnutzenschwellwert nicht überschreitet.
- Dabei wird unter anderem die Relativgeschwindigkeit zu einem vorausfahrenden Fahrzeug und der Abstand berücksichtigt.

Der Erfindung liegt die technische Aufgabe zu Grunde, ein Verfahren und eine Vorrichtung in einem Kraftfahrzeug zum automatisierten Fahren zu schaffen, bei der ein verbesserter automatisierter Fahrspurwechsel möglich ist.

Die technische Aufgabe wird erfindungsgemäß durch ein Verfahren mit den Merkmalen des Patentanspruchs 1 und eine Vorrichtung mit den Merkmalen des Patentanspruchs 7 gelöst. Vorteilhafte Ausgestaltungen der Erfindung ergeben sich aus den Unteransprüchen.

Dazu wird ein Verfahren in einem Kraftfahrzeug zum automatisierten Fahren zur Verfügung gestellt, umfassend die folgenden Schritte: Erfassen von weiteren Kraftfahrzeugen im Umfeld des Kraftfahrzeugs durch mindestens eine Sensorik, Erfassen und Erkennen von Fahrspuren durch die mindestens eine Sensorik, Zuordnen der erfassten weiteren Kraftfahrzeuge zu den erkannten Fahrspuren durch eine Steuerung, Erkennen und Bewerten einer Überholabsicht eines weiteren Kraftfahrzeugs durch eine Überholassistenzeinrichtung und, sofern eine Überholabsicht erkannt wurde: Berechnen eines Gesamtnutzens eines möglichen Fahrspurwechsels durch eine Prognoseeinrichtung, Anpassen eines Fahrverhaltens des Kraftfahrzeugs durch die Steuerung, wobei der mögliche Fahrspurwechsel durchgeführt wird, wenn der berechnete Gesamtnutzen einen vorgegebenen Gesamtnutzenschwellwert erreicht oder überschreitet, und wobei der mögliche Fahrspurwechsel nicht durchgeführt wird, wenn der berechnete Gesamtnutzen den vorgegebenen Gesamtnutzenschwellwert nicht überschreitet.

Die Grundidee liegt darin, eine Überholabsicht eines rückwärtigen Kraftfahrzeuges auf der aktuellen Fahrspur eines Kraftfahrzeugs zu erkennen und im Gesamtkontext einer aktuellen Situation zu bewerten. Je nachdem, ob ein Räumen der aktuellen Fahrspur durch einen möglichen Fahrspurwechsel auf eine Zielspur insgesamt als vorteilhaft bewertet wird oder nicht, wird der mögliche Fahrspurwechsel veranlasst oder nicht.

Der Vorteil ist, dass rückwärtige Kraftfahrzeuge weniger behindert werden, wodurch sich ein Gesamtverkehrsfluss verbessern lässt. Es kommt zu weniger Konflikten auf Straßen und Autobahnen, wobei ein gesenktes Konfliktniveau wiederum zu weniger Stress und damit mehr Komfort, sowohl für die Passagiere des Kraftfahrzeugs als auch für die Passagiere des rückwärtigen Kraftfahrzeugs, führt. Darüber hinaus wertet ein verbesserter Gesamtverkehrsfluss die Umweltbilanz auf, da Kraftfahrzeuge weniger oft abgebremst und beschleunigt werden müssen.

Dabei ist weiter vorgesehen, dass vor dem Berechnen des Gesamtnutzens ein Überprüfen von Zeitvorgaben durch eine Zeitvorgabenüberprüfungseinrichtung durchgeführt wird. Die Zeitvorgabe dient dazu, einen erneuten Fahrspurwechsel zu verhindern, wenn seit einem letzten ausgeführten Fahrspurwechsel eine Zeitdauer kleiner als die Zeitvorgabe vergangen ist.

Dazu ist vorgesehen, dass das Überprüfen der Zeitvorgaben für den möglichen Fahrspurwechsel durch die Zeitvorgabenüberprüfungseinrichtung folgende Schritte umfasst: Überprüfen einer Zeitdauer seit einem letzten vollendeten Fahrspurwechsel, Verwerfen des möglichen Fahrspurwechsels, sofern die Zeitdauer seit dem letzten vollendeten Fahrspurwechsel einen Schwellwert unterschreitet. Auf diese Weise kann eine Art Flatterschutz realisiert werden, so dass ein permanenter Fahrspurwechsel verhindert wird. Ein solcher Flatterschutz verhindert beispielsweise, dass das Kraftfahrzeug in eine enge Lücke auf einer Zielspur wechselt, weil es darin einen Vorteil sieht, und die Zielspur anschließend gleich wieder räumt, weil es eine Überholabsicht eines rückwärtigen Kraftfahrzeugs erkennt. Ein ständiges Wechseln der Fahrspur wird dadurch unterbunden.

Ferner wird eine Vorrichtung in einem Kraftfahrzeug zum automatisierten Fahren geschaffen, umfassend: mindestens eine Sensorik zum Erfassen von weiteren Kraftfahrzeugen im Umfeld des Kraftfahrzeugs und zum Erfassen und Erkennen von Fahrspuren, eine Steuerung, eine Überholassistenzeinrichtung, wobei die Überholassistenzeinrichtung eine Prognoseeinrichtung umfasst, und wobei die Steuerung derart ausgebildet ist, weiteren Kraftfahrzeugen erkannte Fahrspuren zuzuordnen, und wobei die Überholassistenzeinrichtung derart ausgebildet ist, eine Überholabsicht eines rückwärtigen weiteren Kraftfahrzeugs zu erkennen und zu bewerten, und, sofern eine Überholabsicht erkannt wurde, die Prognoseeinrichtung derart ausgebildet ist, einen Gesamtnutzen eines möglichen Fahrspurwechsels zu berechnen, und die Steuerung durch Steuern mindestens einer Aktorik des Kraftfahrzeugs ein Fahrverhalten des Kraftfahrzeugs anpasst, wobei die Steuerung den möglichen Fahrspurwechsel durchführt, wenn der berechnete Gesamtnutzen einen vorgegebenen Gesamtnutzenschwellwert erreicht oder überschreitet, und wobei die Steuerung den möglichen Fahrspurwechsel nicht durchführt, wenn der berechnete Gesamtnutzen den vorgegebenen Gesamtnutzenschwellwert nicht überschreitet.

In einer Ausführungsform ist vorgesehen, dass das Erkennen und Bewerten der Überholabsicht durch die Überholassistenzeinrichtung folgende Schritte umfasst: Überprüfen, ob das weitere Kraftfahrzeug sich rückwärtig auf einer gleichen Fahrspur wie das Kraftfahrzeug befindet, und, sofern dies der Fall ist: Berechnen einer Zeitlücke zwischen dem rückwärtigen Kraftfahrzeug und dem Kraftfahrzeug, Überprüfen, ob eine benachbarte Fahrspur existiert, auf der das rückwärtige Kraftfahrzeug das Kraftfahrzeug überholen kann und darf, und sofern keine benachbarte Fahrspur existiert oder befahren werden darf: Überprüfen, ob die berechnete Zeitlücke zum rückwärtigen Kraftfahrzeug kleiner ist als ein vorgegebener Zeitlückenschwellwert, Berechnen einer Dringlichkeit der Überholabsicht als Funktion der Zeitlücke und des Zeitlückenschwellwertes. Der Vorteil ist, dass sich mit Hilfe der berechneten Dringlichkeit eine aktuelle Verkehrssituation zwischen dem Kraftfahrzeug und dem rückwärtigen Kraftfahrzeug sehr gut abschätzen und bewerten lässt.

Die Dringlichkeit kann dabei beispielsweise mit folgender Formel berechnet werden:

$$\text{Dringlichkeit} = 1 - 0.5 * (\max(\text{Zeitlücke}, \text{ZeitlückeMin}) - \text{ZeitlückeMin}) / (\text{Zeitlückenschwellwert} - \text{ZeitlückeMin}),$$

wobei die Variable zeitlückeMin eine Normierungskonstante ist, welche dafür sorgt, dass die Dringlichkeit maximal 1 werden kann.

Die Zeitlücke kann dabei beispielsweise wie folgt berechnet werden:

```
Zeitlücke = Abstand(rückwärtiges Kraftfahrzeug, Kraftfahrzeug)/(Geschw
indigkeit(rückwärtiges Kraftfahrzeug) –
Geschwindigkeit(Kraftfahrzeug)))
```

Der Zeitlückenschwellwert beträgt dabei vorzugsweise 0.6 s.

In einer Ausführungsform ist vorgesehen, dass das Berechnen des Gesamtnutzens des möglichen Fahrspurwechsels durch die Prognoseeinrichtung folgende Schritte umfasst: Berechnen eines aktuellen Nutzenbeitrags des möglichen Fahrspurwechsels, Berechnen eines Langzeitnutzenbeitrags des möglichen Fahrspurwechsels, wobei der Gesamtnutzen als Funktion des aktuellen Nutzenbeitrags und des Langzeitnutzenbeitrags berechnet wird. Durch die Berücksichtigung eines aktuellen Nutzenbeitrags wird ein kurzzeitiger Nutzen berücksichtigt, wohingegen durch den Langzeitnutzenbeitrag ein längerfristiger Nutzenbeitrag mit in die Bewertung eingeht. So kann für einen möglichen Fahrspurwechsel sowohl die aktuelle Verkehrssituation als auch ein längerfristiger Effekt berücksichtigt werden, so dass insgesamt ein optimales Ergebnis erreicht wird.

Dazu ist in einer Ausführungsform vorgesehen, dass beim Berechnen des aktuellen Nutzenbeitrags eine Kollisionszeit mit einem möglichen vorderen Kraftfahrzeug auf einer Zielspur berücksichtigt wird, wobei der aktuelle Nutzenbeitrag erhöht wird, wenn die Kollisionszeit größer als oder gleich einem vorgegebenen Kollisionszeitschwellwert ist, und wobei der aktuelle Nutzenbeitrag verringert wird, wenn die Kollisionszeit kleiner als der vorgegebene Kollisionszeitschwellwert ist. Auf diese Weise wird beispielsweise berücksichtigt, dass bei dem möglichen Fahrspurwechsel auf die Zielspur gegebenenfalls ein Abbremsen des Kraftfahrzeugs zur Verhinderung einer Kollision mit dem vorderen Kraftfahrzeug und ein anschließendes Beschleunigen notwendig wird.

In einer weiteren Ausführungsform ist dabei vorgesehen, dass der vorgegebene Kollisionszeitschwellwert abhängig von der berechneten Dringlichkeit der Überholabsicht ist. Dies ermöglicht es, den Kollisionszeitschwellwert flexibel an eine aktuelle Verkehrssituation anzupassen. Drängelt beispielsweise ein rückwärtiges Kraftfahrzeug stark, so dass die Dringlichkeit der erkannten Überholabsicht als hoch bewertet wird, so wird ein möglicher Fahrspurwechsel in eine kleine Lücke auf der Zielspur eher in Erwägung gezogen, als wenn die Dringlichkeit der Überholabsicht des rückwärtigen Kraftfahrzeugs geringer ist. Es kann somit stets in angemessener Weise auf die aktuelle Verkehrssituation reagiert werden.

Eine weitere Ausführungsform sieht vor, dass beim Berechnen des Langzeitnutzenbeitrags eine Änderung einer Flussgeschwindigkeit nach einem möglichen Fahrspurwechsel berücksichtigt wird, wobei der Langzeitnutzenbeitrag verringert wird, wenn sich die Flussgeschwindigkeit nach einem möglichen Fahrspurwechsel verringert, und wobei der Langzeitnutzenbeitrag erhöht wird, wenn sich die Flussgeschwindigkeit nach einem möglichen Fahrspurwechsel erhöht. Der Vorteil dabei ist, dass neben der aktuellen Verkehrssituation auch sich längerfristig auswirkende Effekte eines möglichen Fahrspurwechsels in Betracht gezogen werden. Ist beispielsweise die Flussgeschwindigkeit auf der Zielspur geringer, so wird sich dies unter Umständen auf eine Gesamtfahrzeit für eine aktuell vom Kraftfahrzeug absolvierte Fahrt auswirken, so dass es zu Zeit- und Komforteinbußen der Passagiere des Kraftfahrzeugs kommen kann.

Nachfolgend wird die Erfindung anhand bevorzugter Ausführungsbeispiele unter Bezugnahme auf die Figuren näher erläutert. Hierbei zeigen:

Fig. 1    eine schematische Darstellung einer Ausführungsform der Vorrichtung in einem Kraftfahrzeug zum automatisierten Fahren eines Kraftfahrzeugs mit einer Überholassistenzeinrichtung;

Fig. 2a    eine schematische Darstellung eines Fahrspurwechsels bei positivem Gesamtnutzen;

Fig. 2b    eine schematische Darstellung eines Fahrspurwechsels bei positivem Gesamtnutzen;

Fig. 2c    eine schematische Darstellung der Situation, bei der kein Fahrspurwechsel durchgeführt wird;

Fig. 3    ein schematisches Ablaufdiagramm zum Berechnen des Gesamtnutzens eines Fahrspurwechsels;

Fig. 4    ein schematisches Ablaufdiagramm zum Bewerten einer Dringlichkeit einer Überholabsicht eines rückwärtigen Kraftfahrzeugs.

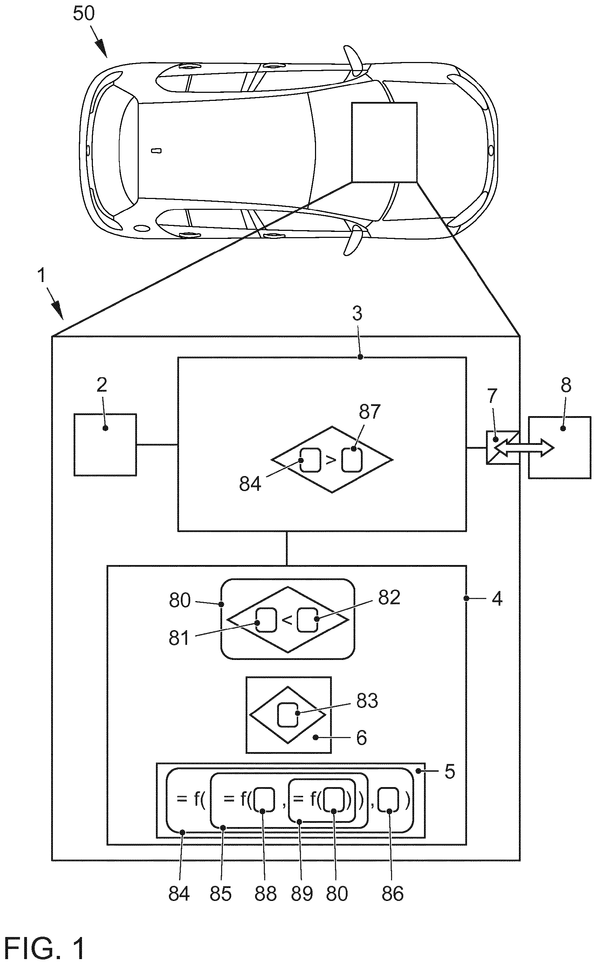

In Fig. 1 ist eine schematische Vorrichtung 1 in einem Kraftfahrzeug 50 zum automatisierten Fahren des Kraftfahrzeugs 50 gezeigt. Die Vorrichtung 1 umfasst eine Sensorik 2 zum Erfassen von weiteren Kraftfahrzeugen im Umfeld des Kraftfahrzeugs und zum Erfassen und Erkennen von Fahrspuren, eine Steuerung 3 und eine Überholassistenzeinrichtung 4. Die Überholassistenzeinrichtung 4 umfasst dabei eine Prognoseeinrichtung 5 und eine Zeitvorgabenüberprüfungseinrichtung 6. Darüber hinaus umfasst die Vorrichtung 1 eine Schnittstelle 7, über die mindestens eine Aktorik 8 des Kraftfahrzeugs 50 gesteuert werden kann.

Die mindestens eine Sensorik 2 erfasst das Umfeld des Kraftfahrzeugs 50 und erkennt die weiteren Kraftfahrzeuge in dem Umfeld. Dabei wird beispielsweise sowohl ein rückwärtiges wie vorderseitiges Umfeld erfasst. Ebenfalls erkennt die mindestens eine Sensorik 2 Fahrstreifen einer aktuell befahrenen Straße. Die Steuerung 3 ordnet den erkannten weiteren Kraftfahrzeugen erkannte Fahrspuren zu. Es sei beispielsweise angenommen, dass es eine aktuelle Fahrspur, auf dem sich das Kraftfahrzeug gerade befindet, und eine Zielspur rechts von der aktuellen Fahrspur gibt.

Will ein rückwärtiges weiteres Kraftfahrzeug das Kraftfahrzeug überholen, so wird es sich von hinten dem Kraftfahrzeug auf der aktuellen Fahrspur nähern. Die Überholassistenzeinrichtung 4 erkennt dann eine Überholabsicht des rückwärtigen Kraftfahrzeugs und bewertet diese.

Dazu berechnet sie zuerst eine Zeitlücke 81 zwischen dem rückwärtigen Kraftfahrzeug und dem Kraftfahrzeug 50. In die Zeitlücke 81 geht der Abstand zwischen dem rückwärtigen und dem Kraftfahrzeug 50 und eine Relativgeschwindigkeit zwischen dem rückwärtigen Kraftfahrzeug und dem Kraftfahrzeug 50 ein.

Anschließend überprüft die Überholassistenzeinrichtung 4, ob eine Überholspur existiert, auf der das rückwärtige Kraftfahrzeug das Kraftfahrzeug überholen könnte und ob diese Überholspur auch durch das rückwärtige Kraftfahrzeug zum Überholen genutzt werden darf. Existiert keine Überholspur oder darf diese nicht benutzt werden, so wird durch die Überholassistenzeinrichtung 4 überprüft, ob die Zeitlücke 81 kleiner als eine Zeitlückenschwellwert 82 ist.

Darauf berechnet die Überholassistenzeinrichtung 4 eine Dringlichkeit 80 der Überholabsicht des rückwärtigen Kraftfahrzeugs. Generell wird die Überholabsicht dabei umso dringlicher bewertet, je schneller sich das rückwärtige Kraftfahrzeug dem Kraftfahrzeug 50 nähert und je stärker es drängelt.

Die Zeitvorgabenüberprüfungseinrichtung 6 überprüft im nächsten Verfahrensschritt, ob Zeitvorgaben 83 existieren. Eine solche Zeitvorgabe 83 kann beispielsweise eine Mindestdauer nach einem vorherigen vollendeten Fahrspurwechsel sein, wobei diese Mindestdauer einzuhalten ist, bis ein weiterer Fahrspurwechsel möglich ist. Eine solche einzuhaltende Mindestdauer kann beispielsweise 7 Sekunden betragen. Ist die Mindestdauer bereits abgelaufen, wird zum nächsten Verfahrensschritt übergegangen.

Die Prognoseeinrichtung 5 berechnet anschließend den Gesamtnutzen 84 eines möglichen Fahrspurwechsels. Dazu wird zuerst ein aktueller Nutzenbeitrag 85 des möglichen Fahrspurwechsels berechnet. Beim Berechnen des aktuellen Nutzenbeitrags 85 wird eine Kollisionszeit 88 mit einem möglichen vorderen Kraftfahrzeug auf einer Zielspur berücksichtigt, wobei der aktuelle Nutzenbeitrag 85 erhöht wird, wenn die Kollisionszeit 88 größer als oder gleich einem vorgegebenen Kollisionszeitschwellwert 89 ist, und wobei der aktuelle Nutzenbeitrag 85 verringert wird, wenn die Kollisionszeit 88 kleiner als der vorgegebene Kollisionszeitschwellwert 89 ist.

Der vorgegebene Kollisionszeitschwellwert 89 ist dabei abhängig von der berechneten Dringlichkeit 80 der Überholabsicht des rückwärtigen Kraftfahrzeugs. Somit kann bei einem drängelnden rückwärtigen Kraftfahrzeug der Kollisionszeitschwellwert 89 abgesenkt werden, so dass das Kraftfahrzeug auch kleinere Lücken auf der Zielspur, z.B. zwischen hintereinander fahrenden Lastkraftwagen, akzeptiert, um das rückwärtige Kraftfahrzeug passieren zu lassen. Drängelt das rückwärtige Kraftfahrzeug hingegen nur geringfügig, so wird abhängig von der Dringlichkeit 80 der Überholabsicht der Kollisionszeitschwellwert 89 zur Akzeptanz unterschiedlich dimensionierter Lücken auf der Zielspur angepasst.

Darüber hinaus wird neben dem aktuellen Nutzenbeitrag 85 von der Prognoseeinrichtung 5 auch ein Langzeitnutzenbeitrag 86 zum Gesamtnutzen 84 berechnet. Dabei wird beispielsweise eine Änderung einer Flussgeschwindigkeit auf der Zielspur nach einem möglichen Fahrspurwechsel berücksichtigt, wobei der Langzeitnutzenbeitrag 86 verringert wird, wenn sich die Flussgeschwindigkeit nach einem möglichen Fahrspurwechsel verringert, und wobei der Langzeitnutzenbeitrag 86 erhöht wird, wenn sich die Flussgeschwindigkeit nach einem möglichen Fahrspurwechsel erhöht. Eine Änderung der Flussgeschwindigkeit auf der Zielspur führt zwangsläufig auch zu einer Änderung einer Geschwindigkeit des Kraftfahrzeugs 50. Die Änderung der Geschwindigkeit wirkt sich auf eine Zeitdauer aus, die das Kraftfahrzeug 50 zum Zurücklegen einer Gesamtstrecke benötigt. Ist die Änderung der Flussgeschwindigkeit groß, beispielsweise wenn ein möglicher Fahrspurwechsel von einer aktuellen Fahrspur mit einer Flussgeschwindigkeit von 130 km/h auf eine von dicht hintereinander fahrenden Lastkraftwagen befahrenen Zielspur mit einer Flussgeschwindigkeit von lediglich 80 km/h führt, dann kann der Einfluss auf die Zeitdauer zum Zurücklegen der Gesamtstrecke beachtlich sein.

Hat die Prognoseeinrichtung 5 den Gesamtnutzen 84 für einen möglichen Fahrspurwechsel berechnet, so entscheidet die Steuerung 3 anschließend, ob ein möglicher Fahrspurwechsel durchgeführt wird oder nicht. Dazu vergleicht die Steuerung 3 den Gesamtnutzen 84 mit einem Gesamtnutzenschwellwert 87. Erreicht der berechnete Gesamtnutzen 84 den Gesamtnutzenschwellwert 87 oder überschreitet diesen, so wird der mögliche Fahrspurwechsel durchgeführt und die aktuelle Fahrspur wird zugunsten des rückwärtigen Kraftfahrzeugs geräumt. Die Steuerung 3 führt dann den Fahrspurwechsel durch, indem sie entsprechende Steuersignale an die mindestens eine Aktorik 8 des Kraftfahrzeugs 50 ausgibt, beispielsweise über die Schnittstelle 7. Liegt der berechnete Gesamtnutzen 84 unterhalb des Gesamtnutzenschwellwertes 87, so wird der mögliche Fahrspurwechsel nicht durchgeführt.

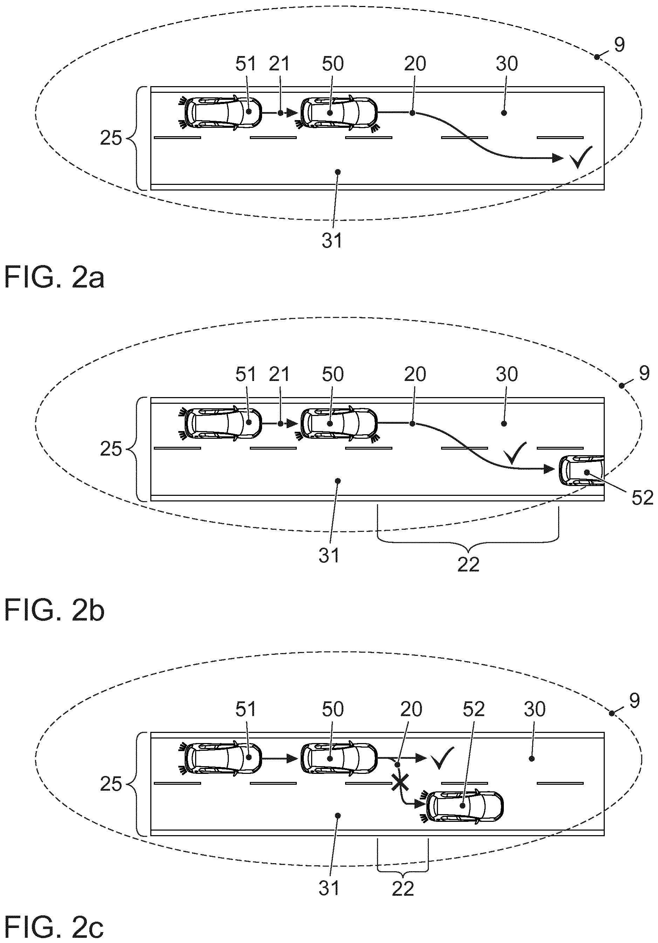

Die Figuren 2a bis 2c zeigen drei mögliche Situationen auf einer Straße 25 zur Erläuterung des Verfahrens. Dabei bezeichnen gleiche Bezugszeichen in den Figuren auch gleiche Gegenstände. In Fig. 2a befinden sich auf der zweispurigen Straße 25 mit einer aktuellen Fahrspur 30 und einer Zielspur 31 ein Kraftfahrzeug 50 und ein rückwärtiges Kraftfahrzeug 51. Das rückwärtige Kraftfahrzeug 51 nähert sich dem Kraftfahrzeug 50 von hinten mit einer höheren Geschwindigkeit als eine Geschwindigkeit des Kraftfahrzeugs 50. Die erfindungsgemäße Vorrichtung erfasst das Umfeld 9 des Kraftfahrzeugs 50, erkennt die Überholabsicht und führt das erfindungsgemäße Verfahren aus. Hier überschreitet ein berechneter Gesamtnutzen einen Gesamtnutzenschwellwert, so dass ein möglicher Fahrspurwechsel 20 von der aktuellen Fahrspur 30 auf die Zielspur 31 durchgeführt wird. In diesem Beispiel ist der mögliche Fahrspurwechsel 20 vorteilhaft, weil das Kraftfahrzeug 50 von der aktuellen Fahrspur 30 ohne Probleme auf die Zielspur 31 wechseln kann, da die Zielspur 31 frei ist.

In Fig. 2b ist die gleiche Situation wie in Fig. 2a gezeigt, jedoch befindet sich nun auf der Zielspur 31 ein vorderes Kraftfahrzeug 52 vor dem Kraftfahrzeug 50. Auch hier wird nach Erkennen der Überholabsicht 21 des rückwärtigen Kraftfahrzeugs 51 ein Gesamtnutzen berechnet. Hier überschreitet der berechnete Gesamtnutzen ebenfalls den Gesamtnutzenschwellwert und ein möglicher Fahrspurwechsel 20 wird durchgeführt. In diesem Beispiel ist der mögliche Fahrspurwechsel 20 trotz des vorderen Kraftfahrzeugs 52 auf der Zielspur immer noch vorteilhaft, da die Lücke 22 hinter dem vorderen Kraftfahrzeug 52 groß genug ist und somit die Kollisionszeit oberhalb eines Kollisionszeitschwellwertes bleibt.

In Fig. 2c ist die in Fig. 2b gezeigte Situation abgewandelt. Das vordere Kraftfahrzeug 52 auf der Zielspur befindet sich jetzt viel näher vor dem Kraftfahrzeug 50, so dass die Lücke 22, welche nach einem möglichen Fahrspurwechsel 20 für das Kraftfahrzeug 50 zur Verfügung steht, sehr viel kleiner ist. Eine Kollisionszeit unterschreitet hier den Kollisionszeitschwellwert. Als Folge überschreitet der berechnete Gesamtnutzen nicht den Gesamtnutzenschwellwert, so dass der mögliche Fahrspurwechsel 20 nicht durchgeführt wird und das Kraftfahrzeug 50 auf der aktuellen Fahrspur 30 verbleibt.

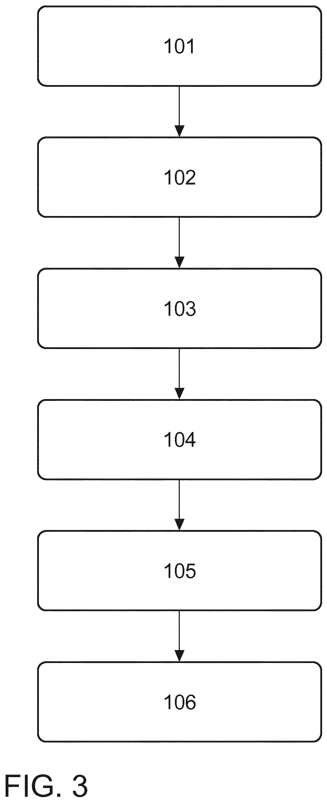

Fig. 3 zeigt ein schematisches Ablaufdiagramm zur Berechnung des Gesamtnutzens eines möglichen Fahrspurwechsels. Im ersten Verfahrensschritt 101 werden weitere Kraftfahrzeuge im Umfeld des Kraftfahrzeugs durch eine Sensorik erkannt. Ebenfalls werden Fahrspuren von der Sensorik erkannt 102. Eine Steuerung ordnet dann die erkannten weiteren Kraftfahrzeuge den erkannten Fahrspuren zu 103.

Im nächsten Schritt 104 wird durch eine Überholassistenzeinrichtung eine Überholabsicht eines rückwärtigen weiteren Kraftfahrzeugs erkannt und durch Berechnen einer Dringlichkeit bewertet. Im nächsten Verfahrensschritt 105 überprüft eine Zeitvorgabenüberprüfungseinrichtung dann, ob Zeitvorgaben eingehalten werden müssen. Im letzten Verfahrensschritt 106 berechnet eine Prognoseeinrichtung einen Gesamtnutzen eines möglichen Fahrstreifenwechsels zum Räumen der aktuellen Fahrspur. Anschließend kann das Verfahren wiederholt werden.

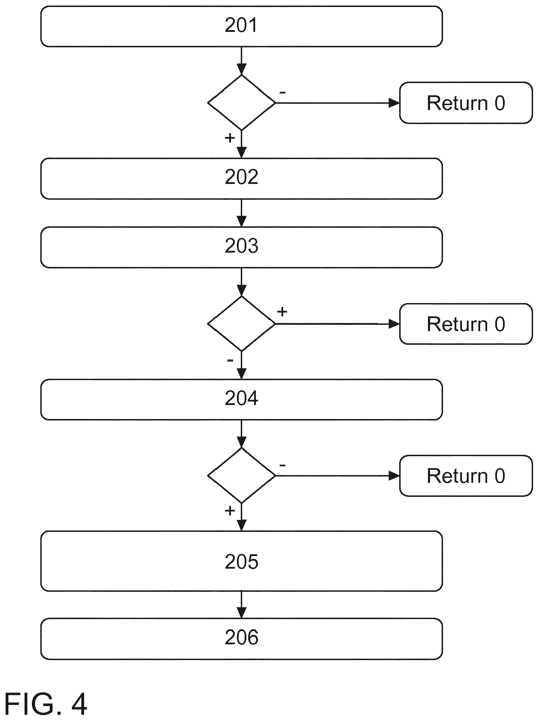

In Fig. 4 ist ein schematisches Ablaufdiagramm zum Berechnen einer Dringlichkeit einer Überholabsicht eines rückwärtigen Kraftfahrzeugs gezeigt. Das Berechnen wird dabei von einer Überholassistenzeinrichtung durchgeführt. Im ersten Verfahrensschritt 201 wird geprüft, ob sich auf einer aktuellen Fahrspur hinter einem Kraftfahrzeug ein rückwärtiges weiteres Kraftfahrzeug befindet. Ist dies nicht der Fall, so wird nichts weiter unternommen. Schritt 201 kann jedoch wiederholt ausgeführt werden. Wird ein rückwärtiges Kraftfahrzeug auf der aktuellen Fahrspur erkannt, so wird eine Zeitlücke zwischen dem Kraftfahrzeug und dem rückwärtigen Kraftfahrzeug berechnet. Dazu wird beispielsweise ein Abstand zwischen dem rückwärtigen Kraftfahrzeug und dem Kraftfahrzeug durch eine Relativgeschwindigkeit zwischen den beiden Kraftfahrzeugen dividiert. Anschließend wird überprüft 203, ob eine weitere Fahrspur existiert, welche von dem rückwärtigen Kraftfahrzeug zum Überholen verwendet werden kann bzw. darf. Ist dies der Fall, so wird das Verfahren zunächst ohne weitere Schritte beendet. Existiert keine weitere Fahrspur, die verwendet werden kann oder darf, so wird im nächsten Schritt 204 geprüft, ob die Zeitlücke unterhalb eines Zeitlückenschwellwertes liegt. Ist dies nicht der Fall, so werden keine weiteren Schritte durchgeführt. Ist die Zeitlücke jedoch kleiner als der Zeitlückenschwellwert, so wird eine Dringlichkeit der Überholabsicht berechnet 205. Zum Schluss 206 wird der berechnete Wert für die Dringlichkeit von der Überholassistenzeinrichtung ausgegeben und beispielsweise zur Weiterverarbeitung an eine Steuerung weitergeleitet.

**Bezugszeichenliste**

| 1 | Vorrichtung |
|---|---|
| 2 | Sensorik |
| 3 | Steuerung |
| 4 | Überholassistenzeinrichtung |

| 5 | Prognoseeinrichtung |
|---|---|
| 6 | Zeitvorgabenüberprüfungseinrichtung |
| 7 | Schnittstelle |
| 8 | Aktorik |
| 9 | Umfeld |
| 20 | Fahrspurwechsel |
| 21 | Überholabsicht |
| 22 | Lücke |
| 25 | Straße |
| 30 | aktuelle Fahrspur |
| 31 | Zielspur |
| 50 | Kraftfahrzeug |
| 51 | rückwärtiges Kraftfahrzeug |
| 52 | vorderes Kraftfahrzeug |
| 80 | Dringlichkeit |
| 81 | Zeitlücke |
| 82 | Zeitlückenschwellwert |
| 83 | Zeitvorgaben |
| 84 | Gesamtnutzen |
| 85 | aktueller Nutzenbeitrag |
| 86 | Langzeitnutzenbeitrag |
| 87 | Gesamtnutzenschwellwert |
| 88 | Kollisionszeit |
| 89 | Kollisionszeitschwellwert |
| 101-106 | Verfahrensschritte zur Berechnung eines Gesamtnutzens |
| 201-206 | Verfahrensschritte zur Berechnung einer Dringlichkeit |

## Patentansprüche

**1.** Verfahren in einem Kraftfahrzeug (50) zum automatisierten Fahren, umfassend die folgenden Schritte:

Erfassen von weiteren Kraftfahrzeugen im Umfeld (9) des Kraftfahrzeugs (50) durch mindestens eine Sensorik (2),
Erfassen und Erkennen von Fahrspuren (30, 31) durch die mindestens eine Sensorik (2),
Zuordnen der erfassten weiteren Kraftfahrzeuge (51, 52) zu den erkannten Fahrspuren (30, 31) durch eine Steuerung (3),
Erkennen und Bewerten einer Überholabsicht (21) eines weiteren Kraftfahrzeugs (51) durch eine Überholassistenzeinrichtung (4) und,
sofern eine Überholabsicht (21) erkannt wurde:

Berechnen eines Gesamtnutzens (84) eines möglichen Fahrspurwechsels (20) durch eine Prognoseeinrichtung (5),
Anpassen eines Fahrverhaltens des Kraftfahrzeugs (50) durch die Steuerung (3),
wobei der mögliche Fahrspurwechsel (20) durchgeführt wird, wenn der berechnete Gesamtnutzen (84) einen vorgegebenen Gesamtnutzenschwellwert (87) erreicht oder überschreitet,
und wobei der mögliche Fahrspurwechsel (20) nicht durchgeführt wird, wenn der berechnete Gesamtnutzen (84) den vorgegebenen Gesamtnutzenschwellwert (87) nicht überschreitet,
**dadurch gekennzeichnet, dass**
vor dem Berechnen des Gesamtnutzens (84) ein Überprüfen von Zeitvorgaben (83) durch eine Zeitvorgabenüberprüfungseinrichtung (6) durchgeführt wird, wobei das Überprüfen der Zeitvorgaben (83) für den möglichen Fahrspurwechsel (20) durch die Zeitvorgabenüberprüfungseinrichtung (6) folgende Schritte umfasst:

Überprüfen einer Zeitdauer seit einem letzten vollendeten Fahrspurwechsel,
Verwerfen des möglichen Fahrspurwechsels (20), sofern die Zeitdauer seit dem letzten vollendeten Fahrspurwechsel einen Schwellwert unterschreitet.

**2.** Verfahren nach Anspruch 1, **dadurch gekennzeichnet, dass** das Erkennen und Bewerten der Überholabsicht (20) durch die Überholassistenzeinrichtung (4) folgende Schritte umfasst:

Überprüfen, ob das weitere Kraftfahrzeug (51) sich rückwärtig auf einer gleichen Fahrspur wie das Kraftfahrzeug (50) befindet, und, sofern dies der Fall ist:

Berechnen einer Zeitlücke (81) zwischen dem rückwärtigen Kraftfahrzeug (51) und dem Kraftfahrzeug (50),
Überprüfen, ob eine benachbarte Fahrspur existiert, auf dem das rückwärtige Kraftfahrzeug (51) das Kraftfahrzeug (50) überholen kann und darf,
und sofern keine benachbarte Fahrspur existiert oder befahren werden darf:

Überprüfen, ob die berechnete Zeitlücke (81) zum rückwärtigen Kraftfahrzeug (51) kleiner ist als ein vorgegebener Zeitlückenschwellwert (82),
Berechnen einer Dringlichkeit (80) der Überholabsicht (20) als Funktion der Zeitlücke (81) und des Zeitlückenschwellwertes (82).

**3.** Verfahren nach einem der Ansprüche 1 oder 2, **dadurch gekennzeichnet, dass** das Berechnen des Gesamtnutzens (84) des möglichen Fahrspurwechsels (20) durch die Prognoseeinrichtung (5) folgende Schritte umfasst:

Berechnen eines aktuellen Nutzenbeitrags (85) des möglichen Fahrspurwechsels (20),
Berechnen eines Langzeitnutzenbeitrags (86) des möglichen Fahrspurwechsels (20),
wobei der Gesamtnutzen (84) als Funktion des aktuellen Nutzenbeitrags (85) und des Langzeitnutzenbeitrags (86) berechnet wird.

**4.** Verfahren nach Anspruch 3, **dadurch gekennzeichnet, dass** beim Berechnen des aktuellen Nutzenbeitrags (85) eine Kollisionszeit (88) mit einem möglichen vorderen Kraftfahrzeug(52) auf einer Zielspur (31) berücksichtigt wird, wobei der aktuelle Nutzenbeitrag (85) erhöht wird, wenn die Kollisionszeit (88) größer als oder gleich einem vorgegebenen Kollisionszeitschwellwert (89) ist, und wobei der aktuelle Nutzenbeitrag (85) verringert wird, wenn die Kollisionszeit (88) kleiner als der vorgegebene Kollisionszeitschwellwert (89) ist.

**5.** Verfahren nach Anspruch 4, **dadurch gekennzeichnet, dass** der vorgegebene Kollisionszeitschwellwert (88) abhängig von der berechneten Dringlichkeit (80) der Überholabsicht ist.

**6.** Verfahren nach einem der Ansprüche 3 bis 5, **dadurch gekennzeichnet, dass** beim Berechnen des Langzeitnutzenbeitrags (86) eine Änderung einer Flussgeschwindigkeit nach einem möglichen Fahrspurwechsel (20) berücksichtigt wird, wobei der Langzeitnutzenbeitrag (86) verringert wird, wenn sich die Flussgeschwindigkeit nach dem möglichen Fahrspurwechsel (20) verringert, und wobei der Langzeitnutzenbeitrag (86) erhöht wird, wenn sich die Flussgeschwindigkeit nach dem möglichen Fahrspurwechsel (20) erhöht.

**7.** Vorrichtung in einem Kraftfahrzeug (50) zum automatisierten Fahren, umfassend:

mindestens eine Sensorik (2) zum Erfassen von weiteren Kraftfahrzeugen (51, 52) im Umfeld (9) des Kraftfahrzeugs (50) und zum Erfassen und Erkennen von Fahrspuren (30, 31),
eine Steuerung (3),
eine Überholassistenzeinrichtung (4),
wobei die Überholassistenzeinrichtung (4) eine Prognoseeinrichtung (5) umfasst,
und wobei die Steuerung (3) derart ausgebildet ist, weiteren Kraftfahrzeugen (51, 52) erkannte Fahrspuren (30, 31) zuzuordnen, und wobei die Überholassistenzeinrichtung (4) derart ausgebildet ist, eine Überholabsicht (21) eines rückwärtigen weiteren Kraftfahrzeugs (51) zu erkennen und zu bewerten, und, sofern eine Überholabsicht (21) erkannt wurde, die Prognoseeinrichtung (5) derart ausgebildet ist, einen Gesamtnutzen (84) eines möglichen Fahrspurwechsels (20) zu berechnen,
und
die Steuerung (3) durch Steuern mindestens einer Aktorik (8) des Kraftfahrzeugs (50) ein Fahrverhalten des Kraftfahrzeugs (50) anpasst, wobei die Steuerung (3) einen Fahrspurwechsel (20) durchführt, wenn der berechnete Gesamtnutzen (84) einen vorgegebenen Gesamtnutzenschwellwert (87) erreicht oder überschreitet, und wobei die Steuerung (3) den Fahrspurwechsel (20) nicht durchführt, wenn der berechnete Gesamtnutzen (84) den vorgegebenen Gesamtnutzenschwellwert (87) nicht überschreitet,

**dadurch gekennzeichnet, dass** vor dem Berechnen des Gesamtnutzens (84) ein Überprüfen von Zeitvorgaben (83) durch eine Zeitvorgabenüberprüfungseinrichtung (6) durchgeführt wird, wobei die Überholassistenzeinrichtung (4) eine Zeitvorgabenüberprüfungseinrichtung (6) umfasst, welche derart ausgebildet ist, Zeitvorgaben für den möglichen Fahrspurwechsel (20) zu überprüfen, wobei

eine Zeitdauer seit einem letzten vollendeten Fahrspurwechsel überprüft wird, wobei ein möglicher Fahrspurwechsel (20) verworfen wird, sofern die Zeitdauer seit dem letzten vollendeten Fahrspurwechsel einen Schwellenwert unterschreitet.

## Claims

1. Method in a motor vehicle (50) for automated driving, comprising the following steps:

   - detecting further motor vehicles in the surroundings (9) of the motor vehicle (50) by at least one sensor system (2),
   - detecting and recognizing lanes (30, 31) by the at least one sensor system (2),
   - relating the detected further motor vehicles (51, 52) to the detected lanes (30,31) by a controller (3),
   - detecting and evaluating an intention to overtake (21) of a further motor vehicle (51) by an overtaking assistance device (4) and
   - when an intention to overtake (21) is detected:

      o calculating the total benefit (84) of a possible lane change (20) by a forecasting device (5),
      o adapting the driving behavior of the motor vehicle (50) by the controller (3), wherein the possible lane change (20) is performed when the calculated total benefit (84) reaches or exceeds a predetermined total benefit threshold (87),
      o and wherein the possible lane change (20) is not performed if the calculated total benefit (84) does not exceed the predetermined total benefit threshold (87),

   **characterized in that**
   before calculating the total benefit (84), checking of timings (83) is performed by a timing checking device (6), wherein checking the timings (83) for the possible lane change (20) by the timing checking device (6) comprises the following steps:

      - checking the time since a last completed lane change,
      - discarding the possible lane change (20) if the time since the last completed lane change falls below a threshold value.

2. Method according to claim 1, **characterized in that** the detection and evaluation of the intention to overtake (20) by the overtaking assistance device (4) comprises the following steps:

   - checking whether the further motor vehicle (51) is located at the rear of the motor vehicle (50) in the same lane and, if so:
   - calculating a time gap (81) between the motor vehicle (51) at the rear and the motor vehicle (50),
   - checking whether there is an adjacent traffic lane on which the motor vehicle (51) at the rear can and may overtake the motor vehicle (50),
   - and if there is no adjacent lane or it may not be driven on:
   - checking whether the calculated time gap (81) to the motor vehicle (51) at the rear is smaller than a predetermined time gap threshold value (82),
   - calculating the urgency (80) of the intention to overtake (20) as a function of the time gap (81) and the time gap threshold (82).

3. Method according to any one of claims 1 or 2, **characterized in that**

   - upon calculating the total benefit (84) of the possible lane change (20) by the forecasting device (5) comprises the following steps:
   - calculating the current benefit contribution (85) of the possible lane change (20),
   - calculating the long term benefit contribution (86) of the possible lane change (20),
   - wherein the total benefit (84) is calculated as a function of the current benefit contribution (85) and the long term benefit contribution (86).

4.  Method according to claim 3, **characterized in that**

    - upon calculating the current benefit contribution (85) and taking into account a collision time (88) with a possible vehicle (52) in front on a target lane (31), the current benefit contribution (85) is increased if the collision time (88) is greater than or equal to a predetermined collision time threshold (89), while the current benefit contribution (85) is reduced if the collision time (88) is less than the predetermined collision time threshold (89).

5.  Method according to claim 4, **characterized in that** the predetermined collision time threshold (88) is dependent on the calculated urgency (80) of the intention to overtake.

6.  Method according to any one of claims 3 to 5, **characterized in that** upon calculating a long-term benefit contribution (86) and taking into account a change in a traffic flow velocity after a possible lane change (20), the long-term benefit contribution (86) is decreased as the traffic flow velocity decreases after the possible lane change (20), while the long-term benefit contribution (86) is increased as the traffic flow velocity increases after the possible lane change (20).

7.  Apparatus in a motor vehicle (50) for automated driving, comprising:

    at least one sensor system (2) for detecting further motor vehicles (51, 52) in the surroundings (9) of the motor vehicle (50) and for detecting and recognizing lanes (30, 31),
    a controller (3),
    an overtaking assistance device (4),
    wherein the overtaking assistance device (4) comprises a forecasting device (5), and wherein the controller (3) is designed to relate detected lanes (30, 31) with other motor vehicles (51, 52), and wherein the overtaking assistance device (4) is designed to detect and evaluate an intention to overtake (21) of a further motor vehicle (51) at the rear, and if an intention to overtake (21) is detected, the forecasting device (5) is designed to calculate the total benefit (84) of a possible lane change (20), and
    the controller (3) adapts the driving behavior of the motor vehicle (50) by controlling at least one actuator (8) of the motor vehicle (50), wherein the controller (3) performs a lane change (20) if the calculated total benefit (84) reaches or exceeds a predetermined total benefit threshold (87)
    and wherein the controller (3) does not perform the lane change (20) if the calculated total benefit (84) does not exceed the predetermined total benefit threshold (87),
    **characterized in that**
    before calculating the total benefit (84), checking of the timings (83) is performed by a timing checking device (6), wherein
    the overtaking assistance device (4) comprises a timing checking device (6) which is designed to check timings for the possible lane change (20), wherein
    the period of time since a last completed lane change is checked, wherein a possible lane change (20) is discarded if the time since the last completed lane change falls below a threshold.

### Revendications

1.  Procédé dans un véhicule automobile (50) pour la conduite automatique, comprenant les étapes suivantes :

    détection d'autres véhicules automobiles dans l'environnement (9) du véhicule automobile (50) par au moins un ensemble de capteurs (2),
    détection et la reconnaissance de voies de circulation (30, 31) par l'au moins un ensemble de capteurs (2),
    attribution des autres véhicules (51, 52) détectés aux voies de circulations (30, 31) détectées par une commande (3),
    détection et évaluation d'une intention de dépassement (21) d'un autre véhicule (51) par un dispositif d'assistance au dépassement (4) et
    si une intention de dépassement (21) a été détectée :

    calcul d'un bénéfice global (84) d'un éventuel changement de voie de circulation (20) par un dispositif de pronostic (5),

adaptation d'un comportement de conduite du véhicule automobile (50) par la commande (3), le changement éventuel de voie de circulation (20) étant effectué lorsque le bénéfice global (84) calculé atteint ou dépasse une valeur seuil de bénéfice globale (87) prédéterminée,

et le changement éventuel de voie de circulation (20) n'étant pas effectué lorsque le bénéfice global (84) ne dépasse pas la valeur seuil de bénéfice globale (87) prédéterminée,

**caractérisé en ce que**

avant le calcul du bénéfice global (84), une vérification de directives de temps (83) est effectuée par un dispositif de vérification de directives de temps (6),

la vérification des directives de temps (83) pour le changement éventuel de voie de circulation (20) par le dispositif de vérification de directives de temps (6) comprenant les étapes suivantes :

vérification d'une durée depuis un dernier changement de voie de circulation effectué,

rejet du changement éventuel de voie de circulation (20) si la durée depuis le dernier changement de voie de circulation effectué est inférieure à une valeur seuil.

2. Procédé selon la revendication 1, **caractérisé en ce que**

la reconnaissance et l'évaluation de l'intention de dépassement (20) par le dispositif d'assistance au dépassement (4) comprend les étapes suivantes :

vérification que l'autre véhicule automobile (51) se trouve en arrière sur une même voie de circulation que le véhicule automobile (50) et, si cela est le cas :

calcul d'un intervalle de temps (81) entre le véhicule en arrière (51) et le véhicule (50),

vérification s'il existe une voie de circulation voisine, sur laquelle le véhicule en arrière (51) peut et est autorisé à dépasser le véhicule (50) et, s'il n'existe aucune voie de circulation voisine ou si aucune voie voisine n'est praticable :

vérification si l'intervalle de temps (81) calculé par rapport au véhicule en arrière (51) est inférieur à une valeur seuil d'intervalle de temps (82) prédéterminée,

calcul d'une urgence (80) de l'intention de dépassement (20) en fonction de l'intervalle de temps (81) et de la valeur seuil d'intervalle de temps (82).

3. Procédé selon l'une des revendications 1 ou 2, **caractérisé en ce que** le calcul du bénéfice global (84) du changement éventuel de voie de circulation (20) par le dispositif de pronostic (5) comprend les étapes suivantes :

calcul d'une contribution au bénéfice actuel (85) du changement éventuel de voie de circulation (20),

calcul d'une contribution au bénéfice à long terme (86) du changement éventuel de voie de circulation (20),

le bénéfice global (84) étant calculé en fonction de la contribution au bénéfice actuel (85) et de la contribution au bénéfice à long terme (86).

4. Procédé selon la revendication 3, **caractérisé en ce que**

lors du calcul de la contribution actuelle au bénéfice (85), un temps de collision (88) avec un éventuel véhicule à l'avant (52) sur une voie cible (31) est pris en compte, la contribution au bénéfice actuel (85) étant augmentée si le temps de collision (88) est supérieur ou égal à une valeur seuil de temps de collision (89) prédéterminée et la contribution au bénéfice actuel (85) étant diminuée si le temps de collision (88) est inférieur à la valeur seuil de temps de collision (89) prédéterminée.

5. Procédé selon la revendication 4, **caractérisé en ce que**

la valeur seuil de temps de collision (88) dépend de l'urgence (80) calculée de l'intention de dépassement.

6. Procédé selon l'une des revendications 3 à 5, **caractérisé en ce que**, lors du calcul de la contribution au bénéfice à long terme (86), une modification d'une vitesse du flux après un changement éventuel de voie de circulation (20) est prise en compte, la contribution au bénéfice à long terme (86) étant diminuée si la vitesse du flux diminue après le changement éventuel de voie de circulation (20) et la contribution au bénéfice global à long terme (86) étant augmentée lorsque la vitesse du flux augmente après le changement éventuel de voie de circulation (20).

7. Dispositif dans un véhicule automobile (50) pour la conduite automatisée, comprenant :

au moins un ensemble de capteurs (2) pour la détection d'autres véhicules (51, 52) dans l'environnement (9) du véhicule (50) et pour la détection et la reconnaissance de voies de circulation (30, 31),

une commande (3),

un dispositif d'assistance au dépassement (4),

le dispositif d'assistance au dépassement (4) comprenant un dispositif de pronostic (5) et

la commande (3) étant conçue de façon à attribuer aux autres véhicules automobiles (51, 52) les voies de circulation (30, 31) détectées et

le dispositif d'assistance au dépassement (4) étant conçu pour reconnaître et évaluer une intention de dépassement (21) d'un autre véhicule en arrière (51) et, si une intention de dépassement (21) a été reconnue, le dispositif de pronostic (5) est conçu pour calculer un bénéfice global (84) d'un changement éventuel de voie de circulation (20) et

la commande (3), par le contrôle d'au moins un ensemble d'actionneurs (8) du véhicule automobile (50), adapte un comportement de conduite du véhicule (50), la commande (3) effectuant un changement de voie de circulation (20) si le bénéfice global (84) calculé atteint ou dépasse une valeur seuil de bénéfice global (87) prédéterminée et la commande (3) n'effectuant pas le changement de voie de circulation (20) si le bénéfice global (84) ne dépasse pas la valeur seuil de bénéfice global (87) prédéterminée,

**caractérisé en ce que**

avant le calcul du bénéfice global (84), une vérification des directives de temps (83) est effectuée par un dispositif de vérification de directives de temps (6),

le dispositif d'assistance au dépassement (4) comprenant un dispositif de vérification de directives de temps (6) qui est conçue pour vérifier les directives de temps pour le changement éventuel de voie de circulation (20), une durée depuis un dernier changement de voie de circulation effectué étant vérifiée, un changement éventuel de voie de circulation (20) étant rejeté si la durée depuis le dernier changement de voie de circulation effectué est inférieure à une valeur seuil.

FIG. 1

FIG. 2a

FIG. 2b

FIG. 2c

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006043149 A1
- DE 102013003219 A1
- WO 2014204381 A1